# FASCICULE DE BREVET EUROPEEN

(11) **EP 1 578 164 B1**
(45) Date de publication et mention de la délivrance du brevet: **23.11.2016**
(21) Numéro de dépôt: 05290413.3
(22) Date de dépôt: 23.02.2005
(51) Int. Cl.: H04W 12/06, H04W 88/02, H04W 8/02

(54) **Procédé pour le contrôle de droits d'accès dans un système de radiocommunications mobiles**
Verfahren zur Zugriffsteuerung in einem Mobilfunk-Kommunikationssystem
Method for controlling access rights in a mobile radio communications system

(30) Priorité: 27.02.2004 FR 0450372
(43) Date de publication de la demande: 21.09.2005
(73) Titulaire: ALCATEL LUCENT, 92100 Boulogne-Billancourt (FR)
(72) Inventeur: Evenou, Jean Alain, 92190 Meudon (FR); Jacob, Michel, 92370 Chaville (FR)
(74) Mandataire: El Manouni, Josiane

(56) Documents cités:
- WO-A-02/25981
- WO-A-98/59513
- PUETZ S ET AL: "SECURE INTEROPERATION BETWEEN 2G AND 3G MOBILE RADIO NETWORKS" INTERNATIONAL CONFERENCE ON 3G MOBILE COMMUNICATION TECHNOLOGIES, XX, XX, 27 mars 2000 (2000-03-27), pages 28-32, XP001016360

## Description

La présente invention concerne d'une manière générale les systèmes de radiocommunications mobiles.

D'une manière générale, les systèmes de radiocommunications mobiles font l'objet de normalisation, et pour plus d'informations on pourra se reporter aux normes correspondantes, publiées par les organismes de normalisation correspondants.

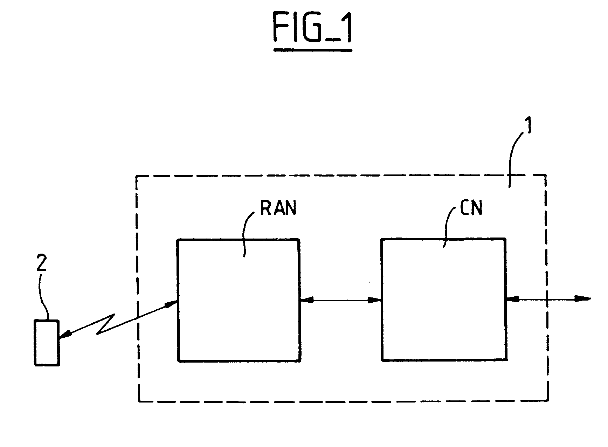

L'architecture générale d'un tel système est rappelée brièvement en relation avec la figure 1. Un tel système comporte un réseau de radiocommunications mobiles 1 communiquant avec des terminaux mobiles 2 et avec des réseaux extérieurs (non illustrés spécifiquement). Le réseau 1 comporte lui-même un réseau d'accès radio 3 (ou RAN, pour « Radio Access Network ») chargé principalement de la transmission et de la gestion des ressources radio sur l'interface radio entre le réseau et les terminaux mobiles, et un réseau coeur 4 (ou CN, pour « Core Network ») chargé principalement du routage et de la gestion des communications.

Les évolutions des besoins et de la technologie conduisent généralement à distinguer différents types de systèmes, notamment des systèmes de deuxième génération et des systèmes de troisième génération.

Un exemple typique de système de deuxième génération est le GSM (« Global System for Mobile communication »). Initialement, le GSM était essentiellement destiné à fournir des services de type circuit. Des services de type paquet ont ensuite été introduits, grâce à la fonctionnalité GPRS (« General packet Radio Service »).

Dans un système tel que le GSM par exemple, le terminal mobile est appelé MS (« Mobile Station »), le réseau d'accès radio (ou RAN) est composé de sous-ensembles appelés BSS (« Base Station Subsystem »), et le réseau coeur (ou CN) comporte notamment, pour le domaine lié à la commutation de circuit (ou « CS Domain » en anglais), des éléments de réseau de type 2G-MSC ( où 2G est utilisé pour « 2^{nd} Generation » et MSC est utilisé pour « Mobile Switching Center ») et, pour le domaine lié à la commutation de paquet (ou « PS Domain » en anglais), des éléments de réseau de type 2G-SGSN ( où 2G est utilisé pour « 2^{nd} Generation » et SGSN est utilisé pour «Serving GPRS Support Node »).

Un exemple typique de système de troisième génération est l'UMTS (« Universal Mobile Télécommunication System »).

Dans un système tel que l'UMTS par exemple, le terminal mobile est appelé UE (« User Equipment »), le réseau d'accès radio (ou RAN) est appelé UTRAN (« UMTS Terrestrial Radio Access Network »), et le réseau coeur (ou CN) comporte notamment, pour le domaine lié à la commutation de circuit (ou « CS Domain » en anglais), des éléments de réseau de type 3G- MSC ( où 3G est utilisé pour « 3^{rd} Generation » et MSC est utilisé pour « Mobile Switching Center ») et, pour le domaine lié à la commutation de paquet (ou « CS Domain » en anglais), des éléments de réseau de type 3G-SGSN ( où 3G est utilisé pour «3^{rd} Generation » et SGSN est utilisé pour «Serving GPRS Support Node »).

Aussi bien dans des systèmes de deuxième génération (tels que GSM par exemple) que dans des systèmes de troisième génération (tels que UMTS par exemple), le réseau coeur comporte en outre des registres ou bases de données d'utilisateurs mobiles, tels que notamment HLR (« Home Location Register ») et VLR (« Visitor Location Register »), ces registres ou bases de données contenant des données d'abonnement et des données de localisation des utilisateurs. Pour le domaine circuit, le VLR est généralement associé au MSC, d'où l'utilisation du terme MSC/VLR. Pour le domaine paquet, le VLR est généralement intégré au SGSN.

Aussi bien dans des systèmes de deuxième génération (tels que GSM par exemple) que dans des systèmes de troisième génération (tels que UMTS par exemple), un terminal mobile est en outre associé à un module d'identification d'abonné, appelé aussi carte SIM (« Subscriber Identification Module ») dans le cas du GSM par exemple, ou USIM (« Subscriber Identification Module ») dans le cas de l'UMTS par exemple.

D'une manière générale, ces systèmes ont une architecture cellulaire, et des mécanismes sont prévus pour choisir en permanence une meilleure cellule serveuse.

Par ailleurs, pour étendre la couverture géographique de ces systèmes et/ou les services proposés, il est généralement prévu une pluralité de réseaux ou PLMNs, généralement associés à différents opérateurs. Des mécanismes sont également prévus pour choisir en permanence un meilleur réseau serveur, si des accords d'itinérance (ou « roaming agreements ») sont prévus entre les opérateurs concernés. On utilise habituellement le terme de réseau nominal ou HPLMN (pour « Home PLMN ») pour désigner le réseau avec lequel un utilisateur est en relation d'abonnement, et réseau visité ou VPLMN (pour « Visited PLMN ») pour désigner un réseau différent du HPLMN, sous la couverture duquel se trouve cet utilisateur.

Le document PUETZ S ET AL : « SECURE INTEROPERATION BETWEEN 2G AND 3G MOBILE RADIO NETWORKS », XP001016360 traite des aspects sécurité de l'interfonctionnement (ou « interworking ») 2G et 3G.

Le document WO-A-02/25981 traite de l'itinérance (ou « roaming ») entre 2G et 3G.

En outre, les cellules d'un réseau donné sont généralement regroupées par zones géographiques, dans un but de gestion de mobilité des utilisateurs et de contrôle des droits d'accès. Ces zones géographiques sont généralement appelées zones de localisation (ou LA, pour « Location Area » dans le cas de domaine circuit) ou zones de routage (ou RA, pour « Routing Area » dans le cas de domaine paquet).

Dans ce qui suit, on considérera, à titre d'exemple, le cas de domaine circuit, et les mécanismes de sélection ou de re-sélection de cellule mis en oeuvre en mode veille (ou « idle mode »).

Un terminal mobile est capable de reconnaître, d'après les informations diffusées dans chaque cellule, si une nouvelle cellule re-sélectionnée par le terminal mobile appartient à la même zone de localisation que sa cellule serveuse actuelle. Si oui, cette nouvelle cellule devient la nouvelle cellule serveuse. Sinon, le terminal en avise préalablement le réseaux, par l'intermédiaire d'une procédure dite de mise à jour de localisation, afin de faire contrôler le droit de l'utilisateur à accéder à la nouvelle cellule.

Dans le cadre de cette procédure de mise à jour de localisation, le terminal mobile transmet au réseau un message dit de requête de mise à jour de localisation, (ou « Location Area Updating Request »).

Dans le cas de réponse positive du réseau, le message retourné par le réseau au terminal mobile est un message dit d'acceptation de mise à jour de localisation (ou « Location Area Updating Accept »). L'utilisateur est alors enregistré dans la nouvelle zone de localisation, et la cellule re-sélectionnée devient la nouvelle cellule serveuse.

Dans le cas de réponse négative du réseau, le message retourné par le réseau au terminal mobile est un message dit de rejet de mise à jour de localisation (ou « Location Area Updating Reject ») qui indique la cause du rejet.

De même une procédure d'enregistrement est prévue lors de la sélection initiale d'une cellule serveuse, à la mise sous tension du terminal.

Les droits d'accès peuvent donc être contrôlés notamment lors d'une procédure d'enregistrement ou de mise à jour de localisation. Des procédures ou protocoles sont prévus à cet effet, faisant intervenir, notamment :
- des échanges de signalisation entre le terminal et une entité serveuse de réseau coeur (telle que notamment une entité de type MSC/VLR pour le domaine circuit),
- des échanges de signalisation entre ladite entité serveuse de réseau coeur, et une base de données d'utilisateurs mobiles, telle que HLR (« Home Location Register »).

Par ailleurs, au moins dans leur phase initiale de déploiement, les réseaux de troisième génération vont venir en supplément à des infrastructures existantes de deuxième génération. En d'autres termes un même système peut alors comporter un réseau d'accès radio de deuxième génération et un réseau d'accès radio de troisième génération avec recouvrement de la couverture radio de deuxième génération par la couverture radio de troisième génération. Ceci permet notamment, pour des services supportés en commun par ces deux générations, tels que notamment des services de type téléphonie, une continuité de service, en bénéficiant de la couverture existante fournie par un réseau de deuxième génération.

Cependant, dans ce contexte, de nouveaux problèmes peuvent se poser, qui peuvent être illustrés au moyen de l'exemple suivant.

Dans le cadre de la fonctionnalité dite d'itinérance SIM (ou « SIM roaming ») il est possible qu'un utilisateur ayant souscrit un abonnement seulement pour des services de deuxième génération (par exemple, dans ce qui suit, GSM) insère sa carte SIM dans un terminal de troisième génération (par exemple, dans ce qui suit, UMTS) et tente d'accéder à un PLMN (qui peut être soit son HPLMN soit un VPLMN avec lequel le HPLMN a des accords d'itinérance) via le réseau d'accès radio (UTRAN dans cet exemple) de ce PLMN. Or il est possible que l'opérateur souhaite réserver l'accès à ce PLMN via l'UTRAN aux seuls utilisateurs ayant souscrit un abonnement pour l'UMTS. Un problème à résoudre est alors d'interdire à un utilisateur ayant souscrit un abonnement seulement pour le GSM de s'enregistrer dans un PLMN via l'UTRAN, tout en lui laissant la possibilité de s'enregistrer dans ce PLMN via le réseau d'accès radio GSM. Il est à noter que ce problème se pose plus particulèrement dans le cas où le même code PLMN est utilisé à la fois pour le GSM et pour l'UMTS.

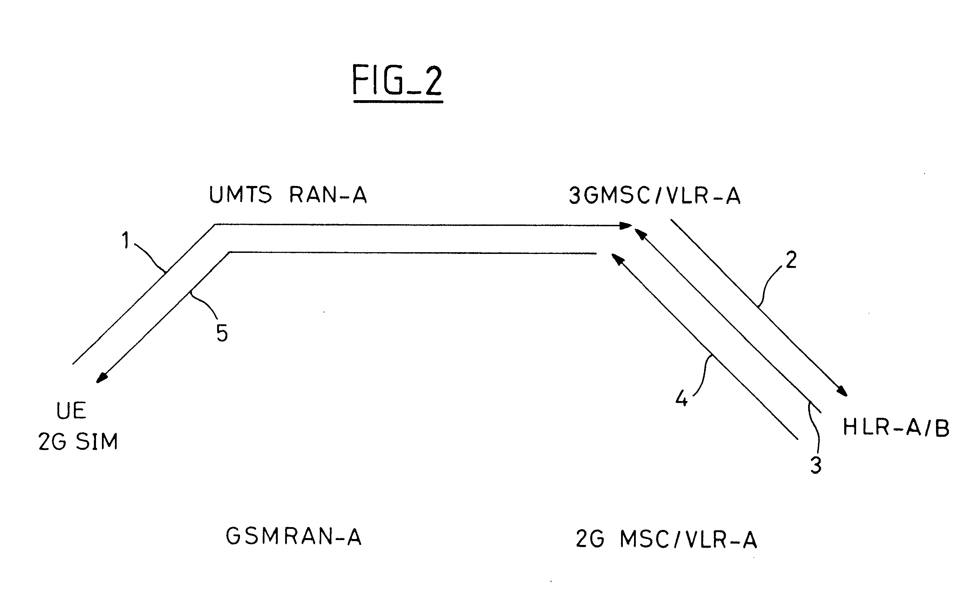

La figure 2 illustre ainsi à titre d'exemple le cas de procédure de mise à jour de localisation dans le cas où un terminal mobile de troisième génération (noté UE) associé à une carte SIM de deuxième génération (notée 2G-SIM) tente d'accéder à un HPLMN via un réseau d'accès radio de troisième génération (noté UMTS RAN). Ce PLMN peut être soit un HPLMN, soit un VPLMN. Ces deux possibilités ont été illustrées au moyen des lettres A et B sur la figure 2, les élements du PLMN considéré étant en l'occurrence notés UMTS RAN-A et 3G MSC/VLR-A, et le HLR étant noté HLR A-B.

A titre d'exemple, la figure 2 correspond au cas de configuration de PLMN où des MSC/VLR dédiés à l'UMTS (notés 3G MSC/VLR) sont prévus, en plus des MSC/VLR dédiés au GSM (notés 2G MSC/VLR).

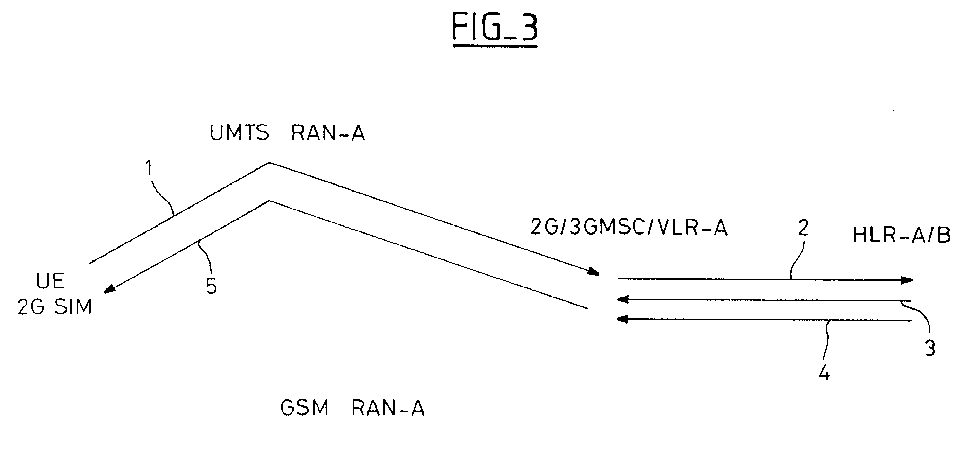

La figure 3 est similaire à la figure 2 (les mêmes références étant utilisées sur ces deux figures) et ne s'en différencie que par le fait qu'elle correspond au cas de configuration de PLMN où un même MSC/VLR (noté 2G/3G MSC/VLR) supporte en commun le GSM et l'UMTS.

La procédure de mise à jour de localisation illustrée par exemple sur la figure 2 inclut les étapes suivantes.

Dans une étape 1, le terminal UE transmet une requête de mise à jour de localisation à un 3G MSC/VLR via le RAN UMTS. On considère à titre d'exemple le cas où la mise à jour de localisation implique un changement de MSC/VLR serveur, et où le nouveau MSC/VLR doit donc préalablement interroger le HLR pour un contrôle de droits d'accès.

A réception de cette requête de mise à jour de localisation, le 3G MSC/VLR ne sait pas s'il s'agit d'un abonné GSM ou UMTS, et, dans une étape 2, transmet donc une requête correspondante au HLR.

Dans une étape 3, une procédure (non rappelée en détail) est mise en oeuvre, par laquelle le nouveau MSC obtient du HLR des données d'abonnement, à stocker dans le VLR associé.

Comme indiqué ci-dessus, un problème à résoudre est alors d'interdire à un utilisateur ayant souscrit un abonnement seulement pour le GSM de s'enregistrer dans un PLMN via l'UTRAN. En d'autres termes, un problème à résoudre est de trouver un moyen permettant au 3G MSC/VLR de détecter si l'utilisateur considéré est un abonné GSM ou un abonné UMTS. En effet, si le 3G MSC/VLR ne peut pas détecter si l'utilisateur considéré est un abonné GSM ou un abonné UMTS, dans une étape 5 il transmet à l'UE un message d'acceptation de mise à jour de localisation (en supposant par ailleurs que l'abonnement souscrit par l'utilisateur ne comporte pas d'autres restrictions, telles que par exemple des restrictions géograhiques, interdisant l'accès à cette nouvelle zone de localisation).

Selon l'état actuel de la norme 3GPP (« 3rd Generation Partnership Project »), les données d'abonnement transférées par le HLR au 3G MSC/VLR ne comportent pas d'indication permettant à ce dernier de détecter si l'utilisateur est un abonné GSM ou un abonné UMTS.

Pour permettre au 3G MSC/VLR de détecter si l'utilisateur est un abonné GSM ou un abonné UMTS, il pourrait être envisagé, comme décrit par exemple dans la demande de brevet WO 02/091784, que le HLR transmette au 3G MSC/VLR des données d'abonnement incluant une liste de services autorisés (tels que notamment les services GSM, UMTS) pour l'utilisateur considéré.

Cependant, une telle solution n'est pas optimale, notamment car elle accroît la quantité de signalisation échangée entre HLR et 3G MSC/VLR, et en outre, ainsi que l'a observé le demandeur, elle n'utilise pas de manière optimale les procédures existantes.

La présente invention a notamment pour but d'éviter de tels inconvénients. Plus généralement un des buts de la présente invention est d'optimiser les procédures de contrôle de droits d'accès, notamment dans les systèmes dans lesquels différents types de services peuvent être offerts, tels que notamment des services de deuxième génération (tels que notamment des services de type GSM) et des services de troisième génération (tels que notamment des services de type UMTS).

Un des objets de la présente invention est un procédé pour le contrôle de droits d'accès dans un système de radiocommunications mobiles, procédé comportant des étapes selon lesquelles :
- une entité serveuse de réseau coeur reçoit, d'une base de données d'utilisateurs mobiles, différents types de données d'authentification suivant le type de services autorisés pour lesdits utilisateurs,
- ladite entité serveuse utilise lesdites données d'authentification pour un contrôle de droits d'accès desdits utilisateurs, suivant le type de services autorisés.

Un autre objet de la présente invention est une entité serveuse de réseau coeur pour système de radiocommunications mobiles, comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle l'architecture générale d'un système de radiocommunications mobiles,
- les figures 2 et 3 sont destinées à illustrer un problème résolu par la présente invention,
- les figures 4 et 5 sont destinées à illustrer un exemple de solution suivant la présente invention.

Dans l'exemple illustré sur les figures 2 et 3, la présente invention suggère, notamment, pour résoudre le problème exposé ci-dessus, qu'une entité serveuse de réseau coeur (telle que par exemple une entité serveuse de type MSC/VLR pour le cas du domaine circuit) utilise, pour détecter si l'utilisateur est un abonné GSM ou un abonné UMTS, des données d'authentification (« authentication » en anglais), ces données étant aussi appelées vecteurs d'authentification et permettant de mettre en oeuvre une procédure d'authentification (« authentication » en anglais).

Par exemple, dans le cas d'une procédure de mise à jour de localisation telle que rappelée dans l'exemple illustré sur les figures 2 et 3, lesdites données (ou vecteurs) d'authentification sont reçues du HLR, dans une procédure (non rappelée en détail) mise en oeuvre dans une étape notée 4.

La présente invention suggère de tirer parti du fait que les données (ou vecteurs) d'authentification sont de différents types suivant le type de services autorisés, en l'occurrence suivant que les services autorisés correspondent à des services de deuxième génération (par exemple GSM) ou à des services de troisième génération (par exemple UMTS), comme il va maintenant être rappelé. Les données d'authentification sont demandées par le MSC/VLR et fournies par le HLR avant les autres données de souscription.

On rappelle que la procédure d'authentification est une procédure permettant au réseau de vérifier, de manière sûre, l'identité d'un utilisateur.

Les princiaples étapes de cette procédure d'authentification sont rappelées dans ce qui suit, tout d'abord pour un système de deuxième génération (par exemple GSM).

La procédure d'authentification comporte un calcul de paramètre appelé SRES (pour « Signed RESult »), en utilisant un algorithme de calcul avec comme paramètres d'entrée de cet algorithme une clé secrète K associée à l'utilisateur et une valeur aléatoire d'un paramètre appelé RAND (« RANDom number »).

Un tel calcul est effectué d'une part dans le réseau (dans un centre d'authentification AuC (« Authentication Center » associé au HLR), et d'autre part dans le terminal (dans la carte SIM), en utilisant le même algorithme de calcul et les mêmes paramètres d'entrée de cet algorithme (la clé secrète K étant connue à la fois dans le réseau et dans le terminal, et la valeur du paramètre RAND étant communiquée par le réseau au terminal).

Le résultat du calcul effectué dans le terminal est communiqué au réseau qui vérifie s'il correspond au calcul qu'il a lui-même effectué. Si oui, la procédure d'authentification se termine positivement.

Dans un système de troisième génération (UMTS par exemple) la procédure d'authentification se différencie principalement de celle ainsi rappelée pour un système de deuxième génération (par exemple GSM) par les points suivants :
- Outre le calcul du paramètre SRES de la manière rappelée précédemment, un calcul de paramètre appelé MAC (« Message Authentication Code ») est également effectué, mettant en oeuvre un algorithme de calcul avec comme paramètres d'entrée de cet algorithme les paramètres RAND et K rappelés ci-dessus, ainsi que des composantes données d'un paramètre appelé AUTN (« AUthentication TokeN »). Ce calcul du paramètre MAC est effectué d'une part dans le réseau et d'autre part dans le terminal, en utilisant le même algorithme de calcul et les mêmes paramètres d'entrée de cet algorithme, le paramètre AUTN étant en outre communiqué au terminal par le réseau.
- Outre le fait que le réseau vérifie si le paramètre SRES qu'il a calculé correspond au paramètre SRES reçu du terminal, de manière à lui permettre de vérifier, de manière sûre, l'identité du terminal, le terminal vérifie également si le paramètre MAC qu'il a calculé correspond au paramètre MAC reçu du réseau serveur, de manière à lui permettre de vérifier, de manière sûre, l'identité du réseau serveur.

D'une manière générale, les vérifications effectuées dans le réseau pour la mise en oeuvre de la procédure d'authentification sont effectuées dans une entité serveuse de réseau coeur, telle que par exemple MSC/VLR pour le cas de domaine circuit, sur la base de données d'authentification qui lui sont communiquées par le HLR/AuC. Ces données (ou vecteurs) d'authentification sont en général communiquées par le HLR/AuC au MSC/VLR lors d'une procédure de mise à jour de localisation impliquant un changement de MSC/VLR serveur. En outre, elles sont en général communiquées en nombre suffisant pour éviter un tel transfert de données (ou vecteurs) d'authentification à chaque fois que le MSC/VLR a besoin de mettre en oeuvre la procédure d'authentification.

Dans le cas de services autorisés de deuxième génération (par exemple GSM) un vecteur d'authentification (appelé aussi « triplet ») comporte trois composantes, à savoir (RAND, SRES, CK), les paramètres RAND et SRES étant ceux rappelés ci-dessus, et le paramètre CK correspondant en outre à une clé de chiffrement (ou « ciphering key »).

Dans le cas de services autorisés de troisième génération (par exemple UMTS) un vecteur d'authentification (appelé aussi « quintet ») comporte cinq composantes, à savoir (RAND, AUTN, SRES, CK, IK), les paramètres RAND, AUTN, SRES, CK étant ceux rappelés ci-dessus, et le paramètre IK correspondant en outre à une clé d'intégrité (ou « integrity key »).

La présente invention suggère donc de tirer parti du fait que les données (ou vecteurs) d'authentification sont de différents types suivant le type de services autorisés, à savoir des services de deuxième génération (par exemple GSM) ou des services de troisième génération (par exemple UMTS).

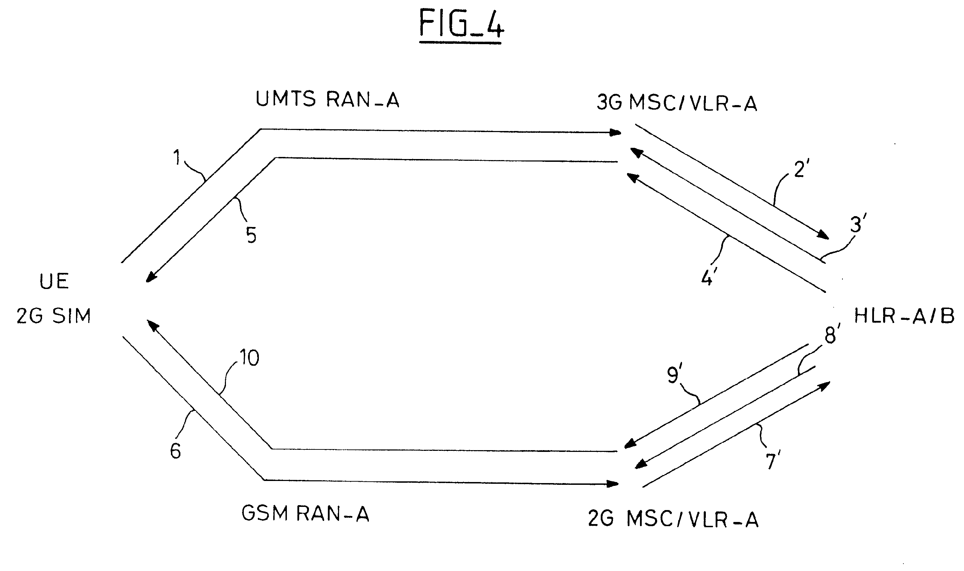

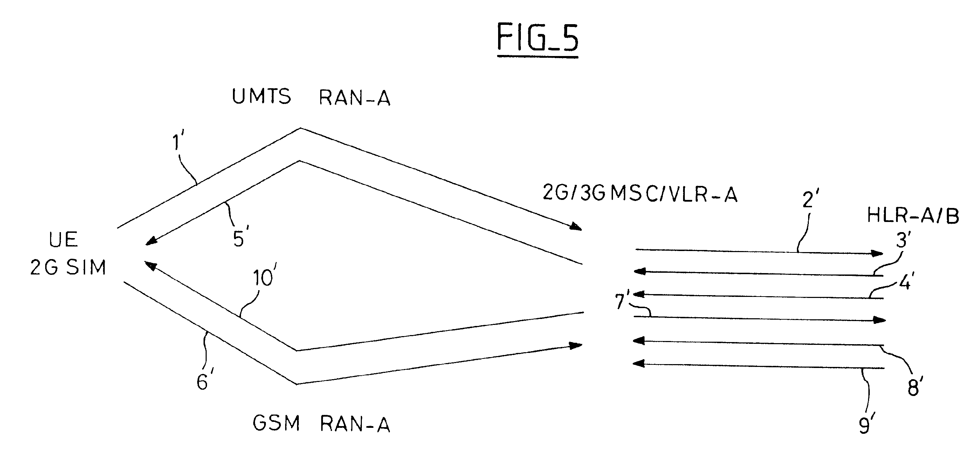

Les figures 4 et 5, correspondant respectivement aux exemples illustrés sur les figures 2 et 3, illustrent un exemple de solution suivant la présente invention.

Les étapes notées 1', 2', 3', 4' illustrées sur les figures 4 et 5 peuvent être similaires aux étapes 1, 2, 3, 4 illustrées sur les figures 2 et 3.

Dans les exemples illustrés sur les figures 4 et 5, le 3G MSC/VLR détecte, sur la base des données (ou vecteurs) d'authentification reçus du HLR, si l'utilisateur est un abonné GSM ou un abonné UMTS.

Si les vecteurs d'authentification correspondent à des triplets, l'utilisateur est considéré comme un abonné GSM et le 3G MSC/VLR envoie alors à l'UE, dans une étape 5', un message de rejet de mise à jour de localisation.

En outre, si le terminal est un terminal bi-mode, noté UE/MS, la cause de rejet de la mise à jour de localisation via l'UMTS RAN est telle qu' une mise à jour de localisation peut alors être tentée via le GSM RAN, comme illustré par les étapes suivantes :
Dans une étape 6', le terminal UE/MS transmet une requête de mise à jour de localisation à un 2G MSC/VLR via le réseau d'accès GSM.

A réception de cette requête de mise à jour de localisation, le 2G MSC/VLR, dans une étape 7', transmet une requête correspondante au HLR.

Dans une étape 8', une procédure est mise en oeuvre, par laquelle le nouveau MSC obtient du HLR des données d'abonnement, à stocker dans le VLR qui lui est associé.

Dans une étape 9', une procédure est mise en oeuvre, par laquelle le nouveau MSC obtient du HLR des données d'authentification lui permettant de mettre en oeuvre une procédure d'authentification.

Dans une étape 10', le 2G MSC/VLR transmet à l'UE/MS un message d'acceptation de mise à jour de localisation (en supposant par ailleurs que l'abonnement souscrit par l'utilisateur ne comporte pas d'autres restrictions, telles que par exemple des restrictions géograhiques, interdisant l'accès à cette nouvelle zone de localisation).

Un des objets de la présente invention est ainsi un procédé pour le contrôle de droits d'accès dans un système de radiocommunications mobiles, procédé comportant des étapes selon lesquelles :
- une entité serveuse de réseau coeur reçoit, d'une base de données d'utilisateurs mobiles, différents types de données d'authentification suivant le type de services autorisés pour lesdits utilisateurs,
- ladite entité serveuse utilise lesdites données d'authentification pour un contrôle de droits d'accès desdits utilisateurs, suivant le type de services autorisés.

Un autre objet de la présente invention est une entité serveuse de réseau coeur (telle que par exemple une entité serveuse de type MSC/VLR pour le cas du domaine circuit, ou SGSN pour le cas du domaine paquet), comportant des moyens pour mettre en oeuvre un tel procédé.

Un autre objet de la présente invention est ainsi une entité serveuse de réseau coeur, comportant :
- des moyens pour recevoir d'une base de données d'utilisateurs mobiles, différents types de données d'authentification suivant le type de services autorisés pour lesdits utilisateurs,
- des moyens pour utiliser lesdites données d'authenfication pour un contrôle de droits d'accès desdits utilisateurs, suivant le type de services autorisés.

Une telle entité serveuse peut en outre comporter :
- des moyens pour, à la suite dudit contrôle de droits d'accès, effectué au cours de la mise en oeuvre d'une procédure d'accès à des services non autorisés, émettre une réponse négative, ladite réponse négative déclenchant la mise en oeuvre d'une procédure d'accès à des services autorisés.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

## Revendications

1. Procédé pour le contrôle de droits d'accès dans un système de radiocommunications mobiles, procédé comportant des étapes selon lesquelles:
- une entité serveuse de réseau coeur reçoit d'une base de données d'utilisateurs mobiles, différents types de données d'authentification suivant le type de services autorisés pour lesdits utilisateurs,
- ladite entité serveuse utilise lesdites données d'authentification pour un contrôle de droits d'accès desdits utilisateurs, suivant le type de services autorisés.

2. Procédé selon la revendication 1, dans lequel différents tyes de services incluent des services de deuxième génération et des services de troisième génération.

3. Procédé selon l'une des revendications 1 ou 2, dons lequel dans le cas de services de deuxième génération, lesdites données d'authentification correspondent à des vecteurs ayant trois composantes.

4. Procédé selon l'une des revendications 1 ou 2, dans lequel dans le cas de services de troisième génération, lesdites données d'authentification correspondent à des vecteurs ayant cinq composantes.

5. Procédé selon l'une des revendications 1 à 4, incluant en outre des étapes selon desquelles :
- à la suite dudit contrôle de droits d'accès, effectué au cours de la mise en oeuvre d'une procédure d'accès à des services non autorisés, ladite entité serveuse de réseau coeur émet une réponse négative,
- ladite réponse négative déclenche la mise en oeuvre d'une procédure d'accès à des services autorisés.

6. Procédé selon la revendication 5, dans lequel ladite procédure d'accès correspond à une procédure de mise à jour de localisation et ladite réponse négative correspond à un rejet de mise à jour de localisation incluant une cause de rejet appropriée.

7. Procédé selon l'une des revendications 1 à 6, dans lequel ladite entité serveuse de réseau coeur reçoit lesdites données d'authentification dans le cadre d'une procédure de mise à jour de localisation.

8. Entité serveuse de réseau coeur pour système de radiocommunications mobiles, ladite entité comportant :
• des moyens pour recevoir d'une base de données d'utilisateurs mobiles, différents types de données d'authentification suivant le type de services autorisés pour lesdits utilisateurs,
• des moyens pour utiliser lesdites données d'authentification pour un contrôle de droits d'accès desdits utilisateurs, suivant le type de services autorisés.

9. Entité selon la revendication 8, dans laquelle différents tyes de services incluent des services de deuxième génération et des services de troisième génération.

10. Entité selon l'une des revendications 8 ou 9, dans laquelle dans le cas de services de deuxième génération, lesdites données d'authentification correspondent à des vecteurs ayant trois composantes.

11. Entité selon l'une des revendications 8 ou 9, dans laquelle dans le cas de services de troisième génération, lesdites données d'authentification correspondent à des vecteurs ayant cinq composantes.

12. Entité selon l'une des revendications 8 à 11, comportant des moyens pour, à la suite dudit contrôle de droits d'accès, effectué au cours de la mise en oeuvre d'une procédure d'accès à des services non autorisés, émettre une réponse négative, ladite réponse négative déclenchant la mise en oeuvre d'une procédure d'accès à des services autorisés.

13. Entité selon la revendication 12, dans laquelle ladite procédure d'accès correspond à une procédure de mise à jour de localisation et ladite réponse négative correspond à un rejet de mise à jour de localisation incluant une cause de rejet appropriée.

14. Entité selon l'une des revendications 8 à 13, dans laquelle ladite entité serveuse de réseau coeur reçoit lesdites données d'authentification dans le cadre d'une procédure de mise à jour de localisation.

15. Entité selon l'une des revendications 8 à 14, correspondant, dans le cas de domaine circuit, à une entité de type MSC/VLR.

16. Entité selon l'une des revendications 8 à 14, correspondant, dans le cas de domaine paquet, à une entité de type SGSN.

## Patentansprüche

1. Verfahren zur Steuerung der Zugangsrechte in einem Mobilfunkkommunikationssystem, wobei das Verfahren die folgenden Schritte umfasst:
- Eine Kernnetz-Servereinheit empfängt von einer Mobilfunkbenutzer-Datenbank verschiedene Typen von Authentifizierungsdaten entsprechend dem Typ der Dienste, für deren Nutzung die besagten Benutzer autorisiert sind;
- besagte Servereinheit benutzt besagte Authentifizierungsdaten für eine Kontrolle der Zugangsrechte der Benutzer entsprechend dem Typ der autorisierten Dienste.

2. Verfahren nach Anspruch 1, wobei verschiedene Typen von Diensten Dienste der zweiten Generation und Dienste der dritten Generation umfassen.

3. Verfahren nach einem der Ansprüche 1 oder 2, wobei im Fall von Diensten der zweiten Generation die besagten Authentifizierungsdaten Vektoren mit drei Komponenten entsprechen.

4. Verfahren nach einem der Ansprüche 1 oder 2, wobei im Fall von Diensten der dritten Generation die besagten Authentifizierungsdaten Vektoren mit fünf Komponenten entsprechen.

5. Verfahren nach einem der Ansprüche 1 bis 4, weiterhin die folgenden Schritte umfassend:
- im Anschluss an besagte, im Zuge eines Zugangsversuchs zu nicht autorisierten Diensten vorgenommene Kontrolle der Zugangsrechte gibt besagte Kernnetz-Servereinheit eine negative Antwort aus;
- besagte negative Antwort löst das Ausführen eines Zugangsverfahrens zu autorisierten Diensten aus.

6. Verfahren nach Anspruch 5, wobei besagtes Zugangsverfahren einem Verfahren zur Aktualisierung des Standorts entspricht und besagte negative Antwort eine Ablehnung der Aktualisierung des Standorts einschließlich eines angemessenen Ablehnungsgrunds darstellt.

7. Verfahren nach einem der Ansprüche 1 bis 6, wobei besagte Kernnetz-Servereinheit besagte Authentifizierungsdaten im Rahmen eines Verfahrens zur Aktualisierung des Standorts empfängt.

8. Kernnetz-Servereinheit für ein Mobilfunkkommunikationssystem, wobei besagte Einheit umfasst:
• Mittel für den Empfang verschiedener Typen von Authentifizierungsdaten von einer Mobilfunkbenutzer-Datenbank entsprechend dem Typ der Dienste, für deren Nutzung die besagten Benutzer autorisiert sind,
• Mittel für die Benutzung besagter Authentifizierungsdaten für eine Kontrolle der Zugangsrechte der Benutzer entsprechend dem Typ der autorisierten Dienste.

9. Einheit nach Anspruch 8, wobei verschiedene Typen von Diensten Dienste der zweiten Generation und Dienste der dritten Generation umfassen.

10. Einheit nach einem der Ansprüche 8 oder 9, wobei im Fall von Diensten der zweiten Generation die besagten Authentifizierungsdaten Vektoren mit drei Komponenten entsprechen.

11. Einheit nach einem der Ansprüche 8 oder 9, wobei im Fall von Diensten der dritten Generation die besagten Authentifizierungsdaten Vektoren mit fünf Komponenten entsprechen.

12. Einheit nach einem der Ansprüche 8 bis 11, Mittel umfassend, um nach besagter, im Zuge eines Zugangsversuchs zu nicht autorisierten Diensten vorgenommener Kontrolle der Zugangsrechte eine negative Antwort auszugeben, wobei besagte negative Antwort das Ausführen eines Zugangsverfahrens zu autorisierten Diensten auslöst.

13. Einheit nach Anspruch 12, wobei besagtes Zugangsverfahren einem Verfahren zur Aktualisierung des Standorts entspricht und besagte negative Antwort eine Ablehnung der Aktualisierung des Standorts einschließlich eines angemessenen Ablehnungsgrunds darstellt.

14. Einheit nach einem der Ansprüche 8 bis 13, wobei besagte Kernnetz-Servereinheit besagte Authentifizierungsdaten im Rahmen eines Verfahrens zur Aktualisierung des Standorts empfängt.

15. Einheit nach einem der Ansprüche 8 bis 14, welche im Fall einer Schaltungsdomäne eine Einheit des Typs MSC/VLR ist.

16. Einheit nach einem der Ansprüche 8 bis 14, welche im Fall einer Paketdomäne eine Einheit des Typs SGSN ist.

## Claims

1. A method for controlling access rights in a mobile radio communications system, which method comprises the steps whereby:
- a core network serving entity receives from a database of mobile users, different types of authentication data depending on the type of services authorized for said users,
- said serving entity uses said authentication data to control access rights of said users, depending on the type of services authorized.

2. A method according to claim 1, wherein different types of services include second-generation services and third-generation services.

3. A method according to one of the claims 1 or 2, wherein in the case of second-generation services, said authentication data corresponds to vectors that have three components.

4. A method according to any one of the claims 1 or 2, wherein in the case of third-generation services, said authentication data corresponds to vectors that have five components.

5. A method according to any one of the claims 1 to 4, further including the steps wherein:
- following said control of access rights, performed during the implementation of a procedure for accessing unauthorized services, said core network serving entity issues a negative response,
- said negative response triggers the implementation of a procedure for accessing authorized services.

6. A method according to claim 5, wherein said access procedure corresponds to a location update procedure and said negative response corresponds to a location update rejection including an appropriate cause of rejection.

7. A method according to one of the claims 1 to 6, wherein said core network serving entity receives said authentication data as a part of a location update procedure.

8. A core network serving entity for a mobile radio communication system, said entity comprising:
• means for receiving from a database of mobile users, different types of authentication data depending on the type of services authorized for said users,
• means for using said authentication data to control access rights of said users, depending on the type of services authorized.

9. An entity according to claim 8, wherein different types of services include second-generation services and third-generation services.

10. An entity according to claims 8 or 9, wherein in the case of second-generation services, said authentication data corresponds to vectors that have three components.

11. An entity according to claims 8 or 9, wherein in the case of third-generation services, said authentication data corresponds to vectors that have five components.

12. An entity according to one of the claims 8 to 11, comprising means for, following said control of access rights, performed during the implementation of a procedure for accessing unauthorized services, issuing a negative response, said negative response triggering the implementation of a procedure for accessing authorized services.

13. An entity according to claim 12, wherein said access procedure corresponds to a location update procedure and said negative response corresponds to a location update rejection including an appropriate cause of rejection.

14. An entity according to one of the claims 8 to 13, wherein said core network serving entity receives said authentication data as a part of a location update procedure.

15. An entity according to one of the claims 8 to 14, corresponding, in the circuit domain, to an entity of MSC/VLR type.

16. An entity according to one of the claims 8 to 14, corresponding, in the packet domain, to an entity of SGSN type.
